Europäisches Patentamt

European Patent Office

Office européen des brevets

(19)

(11) Veröffentlichungsnummer: **0 022 438**
**B1**

(12) **EUROPÄISCHE PATENTSCHRIFT**

(45) Veröffentlichungstag der Patentschrift:
**20.07.83**

(21) Anmeldenummer: **79200390.7**

(22) Anmeldetag: **13.07.79**

(51) Int. Cl.³: **G 01 N 21/53**, G 08 B 17/10

(54) **Verfahren zur Feststellung von Aerosolen in Luft, welche sich in einer Prüfzone befindet sowie Gerät zur Ausführung desselben.**

(43) Veröffentlichungstag der Anmeldung:
**21.01.81 Patentblatt 81/3**

(45) Bekanntmachung des Hinweises auf die Patenterteilung:
**20.07.83 Patentblatt 83/29**

(84) Benannte Vertragsstaaten:
**AT CH DE FR IT NL SE**

(56) Entgegenhaltungen:

**CH-A-417 405
DE-A-2 340 041
DE-A-2 364 184
DE-A-2 630 843**

(73) Patentinhaber: **Securiton AG, Alpenstrasse 20,
CH-3052 Zollikofen (CH)**

(72) Erfinder: **Der Erfinder hat auf seine Nennung verzichtet**

(74) Vertreter: **Bovard, Fritz Albert et al, Bovard & Cie.
Patentanwälte VSP-Rechtsanwälte Optingenstrasse 16,
CH-3000 Bern 25 (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Feststellung von Aerosolen in Luft, welche sich in einer Prüfzone befindet sowie Gerät zur Ausführung desselben

Die Erfindung betrifft ein Verfahren zur Feststellung von Aerosolen in Luft, welche sich in einer Prüfzone befindet. Ferner betrifft die Erfindung ein Gerät zur Ausführung des Verfahrens, mit Mitteln zur Abgrenzung dieser Prüfzone, durch welche ein Aerosol passieren kann, und einem auf Licht ansprechenden Element, welches derart, angeordnet ist, dass es die Prüfzone überwacht.

Aus dem schweizerischen Patent Nr. 417 405 ist ein Gerät zur Feststellung von Aerosolen in der Luft bekannt bei dessen Betrieb im Streulichtverfahren reduzierter Stromverbrauch mit Batteriespeisung durch intermittierende Beleuchtung der Prüfzone erreicht wird, um allfällig vorhandenes Aerosol anzuleuchten und reflektiertes Licht in die Fotozelle als auf Licht ansprechendes Element zu bringen. Das auf Licht ansprechende Element ist nur dann eingeschaltet, wenn die Lichtquelle Licht emittiert. Bei einem gewissen Grenzwert der Amplitude der Ausgangsspannung des Elementes wird ein Alarm ausgelöst.

Aus der DE-A-2 340 041 geht hervor, dass Feuermelder im Durchlichtverfahren derart betrieben werden, dass ein auf Strahlung ansprechender Fototransistor mit einer Hilfsstrahlungsquelle zum Erhalten einer elektrischen Vorspannung konstant beleuchtet wird.

Die so erhaltene Vorspannung dient zum Verschieben des Arbeitspunktes des Fototransistors an eine geeignete Stelle. Allfällig in der Prüfzone vorhandenes Aerosol hat zur Folge, dass ein Alarmkreis frequenzselektiv auf die Amplitudenmodulation anspricht. Beim Ausbleiben von Signalimpulsen wird eine Störung gemeldet, welche Vorrang vor der Alarmmeldung hat, diese aber nicht aufhebt.

Aus der DE-A-2 364 184 war es bekannt, Wechselimpulse bestimmter Dauer von (Laser-) Licht abwechselnd direkt und indirekt auf ein auf Licht ansprechendes Element eines Gerätes zur Messung des Trübungsgrades eines Fluids, auftreffen zu lassen, und dann im Streulichtverfahren eine Anzeige herzuleiten, wobei ein Vergleich der Amplitude der Wechselimpulse zur Bestimmung des Trübungsgrades stattfand.

Die Rauchdetektoren der obgenannten Art werden somit auf zwei verschiedene Arten betrieben. Bei einer ersten Wirkungsweise funktioniert die Lichtquelle ununterbrochen, so dass sie sich nicht für Detektoren eignet, welche mit einer Batterie oder über Netz und eine Hilfsbatterie gespeist werden. Obwohl die Detektoren dieses Typs einfach zu fabrizieren und sehr empfindlich sind, weisen sie den Nachteil auf, dass sie wegen der Wiedergabecharakteristik der verwendeten Fotowiderstände etwas langsam reagieren.

Bei einer zweiten Wirkungsweise wird ein pulsierendes Licht verwendet, um den Stromverbrauch zu reduzieren. In diesem Fall sind jedoch Fotozellen notwendig, welche rascher reagieren und teurer sind. Ferner muss die verwendete Lichtquelle eine höhere Ausgangsleistung aufweisen, als eine ununterbrochen funktionierende Lichtquelle. Auch werden die Kosten dadurch erhöht, dass ein Verstärker vorgesehen werden muss, um die reduzierte Ausgangsleistung einer rascher reagierenden Fotozelle zu kompensieren.

Es ist Aufgabe der Erfindung, ein Verfahren und ein Gerät zur Feststellung von Aerosolen in Luft anzugeben, wobei trotz Verwendung eines billigen und relativ trägen lichtempfindlichen Elementes eine sichere und schnelle Anzeige ermöglicht wird und die Stromaufnahme gering ist.

Das erfindungsgemässe Verfahren ist durch die im kennzeichnenden Teil des Patentanspruches 1 angeführten Merkmale gekennzeichnet.

Das erfindugsgemässe Gerät ist durch die im kennzeichnenden Teil des Patentanspruches 3 angeführten Merkmale gekennzeichnet.

Die Erfindung wird nunmehr anhand von Ausführungsbeispielen in Verbindung mit den beigefügten Zeichnungen im einzelnen beschrieben.

In den Zeichnungen zeigt:

Fig. 1 ein Blockschema des erfindungsgemässen Gerätes,

Fig. 2 ein elektrisches Schema einer ersten Ausführungsform des erfindungsgemässen Gerätes,

Fig. 3 ein Diagramm der Ausgangsspannung des auf Licht ansprechenden Elementes,

Fig. 4 einen Teil des Diagrammes gemäss Fig. 3 in einem grösseren Massstab,

Fig. 5 einen anderen Teil des Diagramms gemäss Fig. 3 in einem grösseren Massstab,

Fig. 6 ein elektrisches Schema einer zweiten Ausführungsform des erfindungsgemässen Gerätes, und

Fig. 7 ein elektrisches Schema einer dritten Ausführungsform des erfindungsgemässen Gerätes.

In den Zeichnungen sind Merkmale deren Funktion grundlegend identisch ist mit Bezugszeichen versehen, die aus der Abbildungsnummer und der Nummer des allen Varianten gemeinsamen Merkmales bestehen.

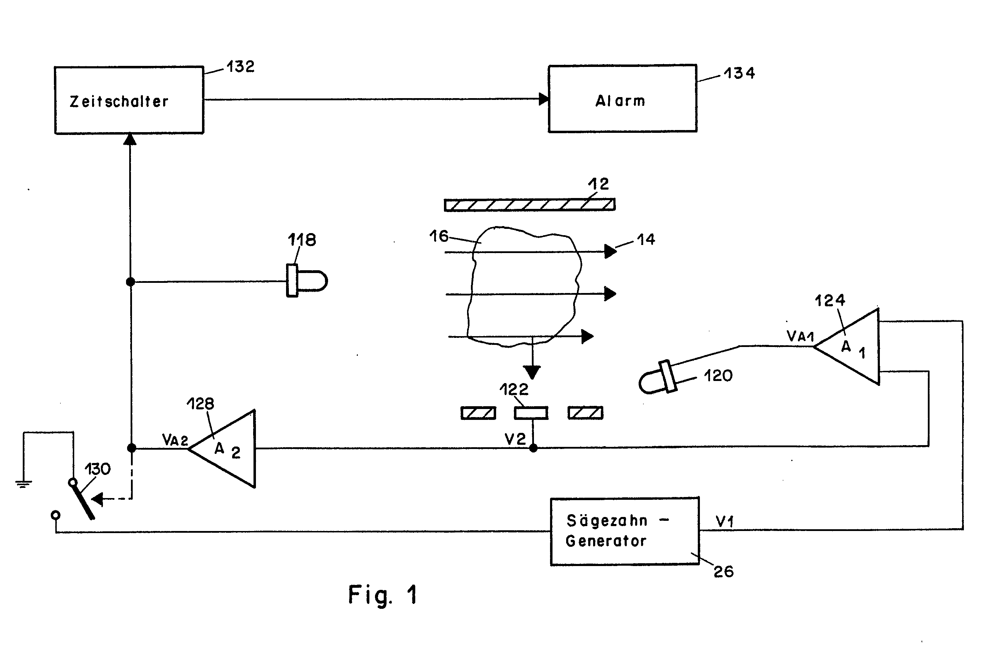

In Fig. 1 ist mit 12 ein Gehäuse bezeichnet, welches eine Rauchkammer 14 bildet, die offen für die Umgebungsluft, aber mit bekannten Mitteln gegen Umgebungslicht geschützt ist. Die Rauchkammer 14 bildet eine Prüfzone, durch welche Aerosole, wie z.B. Rauchpartikel passieren können, um festgestellt zu werden. Eine Wolke 16 von Rauchpartikeln kann von einer Lichtquelle 118 beleuchtet werden, welche in einer bevorzugten Ausführungsform eine Leuchtdiode ist. Eine zweite Lichtquelle 120, welche auch eine Leuchtdiode sein kann, ist im Gehäuse 12 angeordnet und auf ein Element 122 gerichtet, welches in der Kammer 14 montiert ist und auf das von Rauchpartikeln reflektierte Licht anspricht, die von der Lichtquelle 118 beleuchtet werden.

Die Lichtquelle 120 ist an den Ausgang eines Verstärkers 124 angeschlossen, welcher Eingangsspannungen von einem Sägezahngenerator 26 und vom auf Licht ansprechenden Element 122, welches ein Fotowiderstand ist, erhält. Der Fotowiderstand 122 liefert eine Eingangsspannung einem Verstärker 128, welcher ein Pegeldetektor mit Hysteresis ist. Ein Schalter 130 ist mit dem Ausgang des Verstärkers 128 und mit dem Sägezahngenerator 26 verbunden. Ein Zeitschalter 132 ist an den Ausgang des Verstärkers 128 angeschlossen und kann ein Signal liefern, um ein Alarmmittel 134 zu betätigen. Ferner ist der Ausgang des Verstärkers 128 mit der Lichtquelle 118 verbunden.

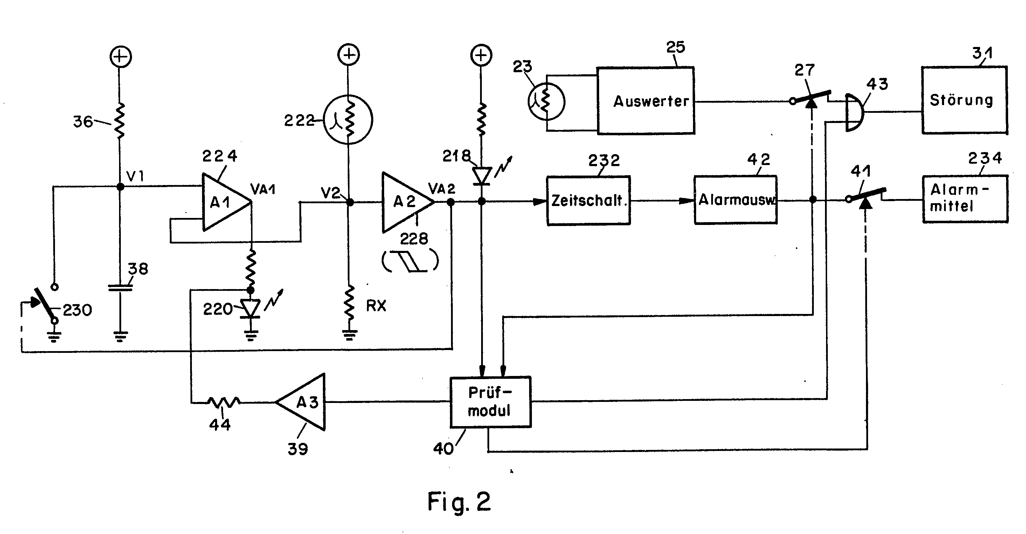

Der Stromkreis gemäss Fig. 2 ist demjenigen gemäss Fig. 1 ähnlich, mit folgenden Ausnahmen. Ein auf Licht ansprechendes Element 23 ist derart angeordnet, dass es das von der Leuchtdiode 218 gelieferte Licht empfängt. Das Element 23 ist an eine Auswerteschaltung 25 angeschlossen, welche über ein Schaltmittel 27 und ein Oder-Tor 43 mit einem Störungsmelder 31 verbunden ist. Der Zeitschalter 232 ist über eine Alarmauswerteschaltung 42 und einen Schalter 41 an das Alarmmittel 234 angeschlossen. Ein Prüfmodul 40 ist über einen Verstärker 39 und einen Widerstand 44 mit der Leuchtdiode 220 verbunden. Dieses Prüfmodul ist ferner mit dem Ausgang des Verstärkers 228 und der Leuchtdiode 218, dem Ausgang der Alarmauswerteschaltung 42, dem Eingang des Oder-Tors 43 und dem Schalter 41 verbunden.

Der Stromkreis gemäss Fig. 2 wirkt folgendermassen. Nehmen wir an, dass eine Gleichstromquelle, z.B. ein Gleichstromnetz oder eine Batterie an den Stromkreis angeschlossen ist und dass der Schalter 230 offen ist. Der Sägezahngenerator, welcher durch einen Widerstand 36 und einen Kondensator 38 gebildet ist, liefert eine Spannung V1, welche zu steigen beginnt. Die Spannung V1 wird mit der Ausgangsspannung V2 des auf Licht ansprechenden Elements 222 verglichen. Die Spannungen V1 und V2 werden deshalb an den Verstärker 224 angelegt. Wenn die Spannung V2 kleiner als die Spannung V1 ist, dann erregt der Verstärker 224 die Leuchtdiode 220, welche den Fotowiderstand 222 direkt beleuchtet, so dass die Ausgangsspannung V2 des Fotowiderstandes 222 steigt, wodurch dieser vorgespannt wird. Immer wenn die Spannung V2 grösser als die Spannung V1 wird, entregt der Verstärker 224 die Leuchtdiode 220. Somit hält der Verstärker 224 die Spannung V2 auf dem steigenden Pegel der Spannung V1.

Während dieser Wirkungsphase des Stromkreises steigt die Spannung V2, bis der Einschaltpegel des Verstärkers 228 erreicht ist, welcher wie bereits erwähnt, ein Pegeldetektor mit Hysteresis ist. Wenn der Einschaltpegel des Verstärkers 228 erreicht ist, wird die Ausgangsspannung VA2 negativ, wodurch der Schalter 230 geschlossen und die Leuchtdiode 218 erregt wird. Die Spannung V1 fällt rasch unter den Pegel der Spannung V2, so dass die Leuchtdiode 220 entregt wird. Der Verstärker 228 liefert weiter eine negative Spannung VA2, bis die Spannung V2 kleiner als der Rückstellpegel des Verstärkers 228 wird. Wenn der Rückstellpegel erreicht ist, dann wird die Ausgangsspannung des Verstärkers 228 positiv, wodurch die Leuchtdiode 218 entregt und der Schaltkontakt 230 geöffnet wird. Dadurch steigt die Spannung V1 und ein neuer Zyklus beginnt. Die Spannung VA2 ist während ca. 100 ms null.

Wenn eine genügende Rauchmenge oder ein anderes Aerosol in der Kammer 14 vorhanden ist, dann wird das von der Leuchtdiode 218 ausgestrahlte Licht durch die Rauchpartikel in der Wolke 16 reflektiert, wobei ein Teil des reflektierten Lichtes auf das Licht ansprechende Element 222 fällt. Das auf das Element 222 fallende reflektierte Licht verursacht, dass die Spannung V2 langsamer fällt, als wenn kein Rauch vorhanden wäre und kein reflektiertes Licht auf das Element 222 fallen würde.

Der Zeitschalter 232 stellt fest, ob die Zeit zwischen dem Zeitpunkt, in welchem die abfallende Spannung V2 den Einschaltpegel des Verstärkers 228 erreicht, und dem Zeitpunkt, in welchem sie den Rückstellpegel dieses Verstärkers erreicht, grösser als 200 ms ist. Wenn sie grösser ist, dann betätigt der Zeitschalter 232 das Alarmmittel 234. Wenn diese Zeit kleiner als 200 ms ist, dann wird der Verstärker 228 zurückgestellt, und der Zyklus wiederholt sich.

Das auf Licht ansprechende Element 23 dient zur Feststellung des Vorhandenseins von zyklisch durch die Leuchtdiode 218 gelieferten Lichtimpulsen. Beim Ausbleiben dieser Lichtimpulse wird Störung gemeldet. Im Falle eines Alarms wird das Schaltmittel 27 geöffnet, so dass keine Störung gemeldet werden kann. Nach einer gewissen Anzahl von durch den Verstärker 228 gelieferten Impulsen, die durch das Prüfmodul 40 gezählt werden, tritt dieses während der Leuchtzeit der Leuchtdiode 218 in Funktion. Dabei bringt das Prüfmodul die Leuchtdiode 220 über den Verstärker 39 zum Leuchten, wodurch die Spannung V2 weiter ansteigt. Dadurch wird der Rückstellpegel des Verstärkers 228 erst später erreicht, so dass der Zeitschalter 232 die Alarmauswerteschaltung 42 nach 200 ms aktiviert. Während der Prüfung wird der Schalter 41 geöffnet, um die Auslösung eines Alarmes zu unterdrücken. Wird die Alarmauswerteschaltung 42 wegen eines Defektes des Gerätes nicht aktiviert, dann findet eine Störungsmeldung über das Oder-Tor 43 statt. Auf diese Weise wird die Funktionstüchtigkeit des Gerätes überwacht und jede Störung gemeldet.

Der Stromkreis gemäss Fig. 1 und 2 benötigt eine sehr geringe Leistung, und er eignet sich sehr gut für die Verwendung einer Batterie für seine Speisung. Es wird eine geringe Leistung benötigt, weil die Lichtquellen nur während kurzen Zeitabschnitten erregt werden. Die Leuchtdiode 220 beleuchtet direkt das auf Licht ansprechende Element 222, so dass nur Mikroampèrs benötigt werden, um dieses Element vorzuspannen. Auch die Leuchtdiode 218 funktioniert nur während einer kurzen Zeit, wobei sie höchstens während 0,2 s alle 10 s leuchtet, so dass der Strom-Mittelwert 1/50 des normalen Betriebsstromes ist. In diesem Fall 1/50 von z.B. 5 mA sind 100 µA.

Die verwendete Technik erlaubt es, ein verhältnismässig billiges und wenig empfindliches auf Licht ansprechendes Element zu verwenden. Diese Technik nützt die Abfallzeit der Spannung dieses Elements aus.

Die Wiedergabecharakteristik eines auf Licht ansprechenden Elementes, z.B. eines Cadmium Sulfo-Selenid Elementes, weist eine Anstiegszeit von 800 ms, aber eine Abfallzeit von 250 ms auf. Dadurch, dass der abfallende Teil der Wiedergabecharakteristik des auf Licht ansprechenden Elementes verwendet wird, ist es möglich eine höhere Detektionsgeschwindigkeit zu erreichen, weil das auf Licht ansprechende Element durch die Leuchtdiode 220 auf den Alarmpunkt gebracht wird, bevor die Leuchtdiode 218 erregt wird. Auf diese Weise verliert das Element 222 keine Zeit, um den Scheitelwert der Spannung V2 zu erreichen.

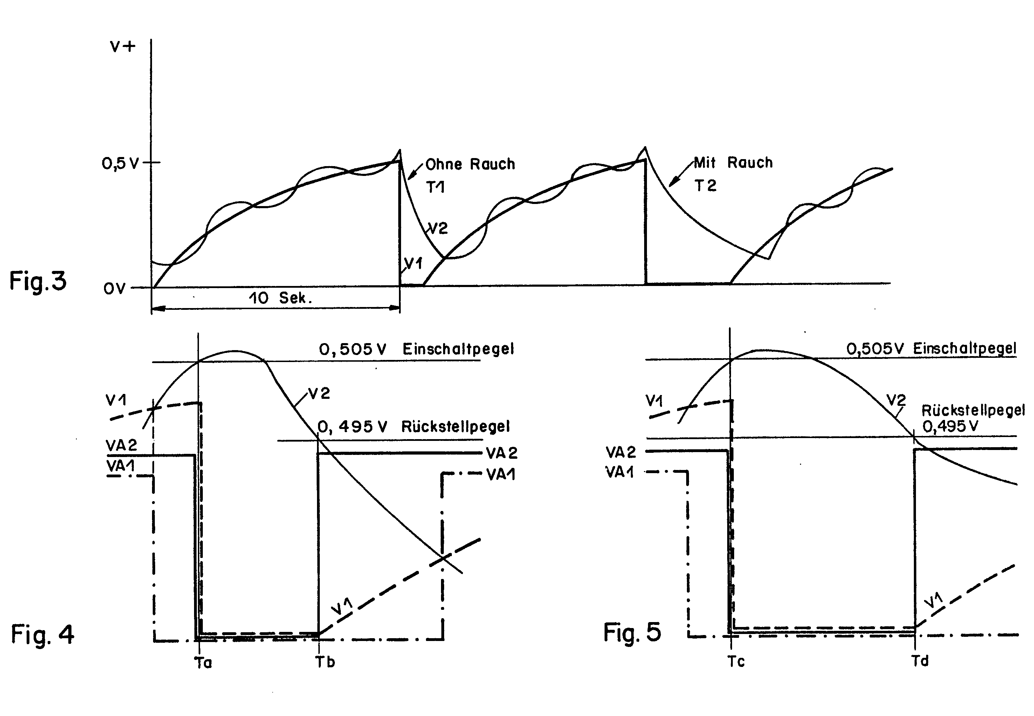

In den Fig. 3, 4 und 5 sind die Kennlinien der Spannungen V1 und V2 dargestellt, um die verschiedenen Abfallcharakteristiken des auf Licht ansprechenden Elementes zu zeigen, zuerst wenn kein Rauch in der Rauchkammer vorhanden ist und dann wenn Rauch in der Kammer 12 vorhanden ist. In Fig. 3 wiederholt sich die Form der Sägezahnimpulse, weil diese durch die fixen Parameter des Sägezahngenerators 26 bestimmt ist. Nur der Zeitpunkt des Beginns eines neuen Impulses hängt von der Anwesenheit oder Abwesenheit von Rauch ab. Die Kennlinie von V2 verändert sich und weist verschiedene Abfallcharakteristiken auf. Die erste Abfallflanke von V2, welche mit T1 bezeichnet ist, bei welcher kein Rauch vorhanden ist, weist einen steilen Abfall auf. Es wird angenommen, dass während des nächsten Zykluses Rauch in der Kammer vorhanden ist, so dass die Abfallflanke T2 weniger steil ist.

In Fig. 4 ist die Abfallflanke T1 von V2 in einem grösseren Massstab gezeigt. Ferner wurden die Ausgangsspannung VA1 des Verstärkers 224 und die Ausgangsspannung VA2 des Verstärkers 228 dargestellt. Wenn der Verstärker 228 durch Erreichen des Einschaltpegels durch V2 betätigt wird, steuert er die Spannung VA2 gegen Erdpotential im Zeitpunkt Ta und diese Spannung erreicht ihren maximalen positiven Wert im Zeitpunkt Tb, wenn V2 den Rückstellpegel des Verstärkers 228 erreicht. Die Zeit zwischen Ta und Tb ist ungefähr 100 ms gleich.

In Fig. 5 ist die Abfallflanke T2 von V2 gemäss Fig. 3 in einem grösseren Massstab gezeigt. Diese Abfallflanke erstreckt sich zwischen den Zeitpunkten Tc un Td, das heisst zwischen 0,505 V un 0,495 V. In diesem Fall Td — Tc = 200 ms, und diese Zeit genügt, um ein Signal zu erzeugen, weil der Zeitschalter 232 einen grösseren Wert als vorherbestimmt festgestellt hat.

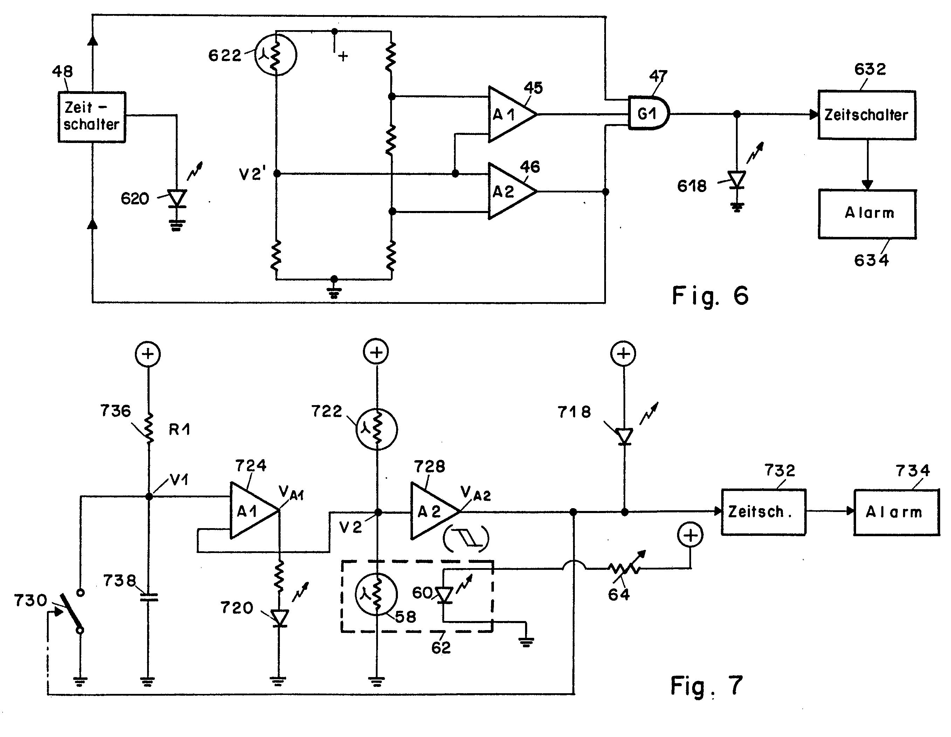

In der Ausführungsform gemäss Fig. 6 wird eine andere Technik angewendet, um verschiedene Punkte einer Kurvenform zur Feststellung von Rauch zu verwenden. Die Verstärker 45 und 46 bilden einen Fenster-Diskriminator, dessen Eingangsspannungen durch ein Netzwerk geliefert werden, welches das auf Licht ansprechende Element 622 aufweist. Dieses Element erzeugt eine Ausgangsspannung V2'. Die Verstärker 45 und 46 liefern Eingangspannungen für ein Gatter 47, welches den Zeitschalter 632 steuert, der an das Alarmmittel 634 angeschlossen ist. Die Leuchtdiode 618 ist zwischen dem Gatter 47 und dem Zeitschalter 632 angeschlossen und die Leuchtdiode 620 wird durch einen anderen Zeitschalter 48 gesteuert, welcher eine zusätzliche Eingangsspannung für das Gatter 47 liefert.

Die Verstärker 45 und 46 arbeiten so, dass das auf Licht ansprechende Element 622 ständig oberhalb eines sehr hohen Schwellwertes gehalten wird, wobei ein vorgespannter Zustand erhalten wird, ähnlich wie in der ersten Ausführrungsform. Der Zeitschalter 48 dient zur Entregung der Leuchtdiode 620, wobei die Ausgangsspannung V2' des Elementes 622 abnimmt, bis der obere Schwellwert des Diskriminators erreicht ist. In diesem Zeitpunkt schaltet das Gatter 47 um und bleibt in diesem Zustand, bis der untere Schwellwert des Fensters erreicht ist. Beim unteren Schwellwert wird der Zeitschalter 632 zurückgestellt und das Gatter 47 gesperrt.

In der Ausführungsform gemäss Fig. 7 sind Mittel zur Kompensation der thermischen Umgebungseinflüsse vorgesehen. Der Stromkreis gemäss Fig. 7 ist demjenigen gemäss Fig. 2 ähnlich mit der Ausnahme, dass der Widerstand RX durch ein auf Licht ansprechendes Element 58 ersetzt ist, welches durch eine Lichtquelle 60, die eine Leuchtdiode ist, beleuchtet wird, wobei das Element 58 und die Leuchtdiode 60 in einem geschlossenen Modul 62 angeordnet sind. Während des Betriebes ist die Leuchtdiode 60 kontinuierlich unter Spannung, während die Leuchtdiode 718 und 720 gleich wie in der Ausführungsform gemäss Fig. 1 und 2 in Abhängigkeit von der Zeit funktionieren. Die Stromstärke durch die Leuchtdiode 60 wird mit einem veränderlichen Widerstand 64 reguliert, welcher so eingestellt werden muss, dass der Widerstand des auf Licht ansprechenden Elementes 58 gleich dem Widerstand des auf Licht ansprechenden Elementes 722 wird, wenn Rauch vorhanden ist. Der Stromkreis mit zwei auf Licht ansprechenden Elementen hebt nicht nur die thermischen Umgebungseinflüsse auf, sondern erlaubt auch, die Empfindlichkeit der Schaltung durch eine entsprechende Regulierung des veränderlichen Widerstandes 64 zu bestimmten.

In den Ausführungsformen gemäss Fig. 6 und 7 kann auch der Stromkreis zur Überwachung der Funktionstüchtigkeit des Gerätes, wie in Fig. 2 dargestellt, vorgesehen werden.

Es sind noch andere Abänderungen möglich. Zum Beispiel kann man das auf Licht ansprechende Element 122 auf einem hohen Pegel mittels einer Lichtquelle mit konstanter Lichtstärke statt mit einer pulsierenden Lichtquelle halten, welche periodisch mittels einer Steuereinheit ausgeschaltet wird, wenn eine zweite Lichtquelle eingeschaltet wird, um vorhandenen Rauch zu beleuchten, wobei die abfallende Flanke der Kurvenform gemessen werden kann. Diese Lösung weist jedoch einen Nachteil auf, weil die Leistungsaufnahme des Gerätes grösser wird. Auch kann das Gerät verschiedene Punkte entlang eines anderen Teils der Kurvenform der Spannung V2 als entlang der Abfallflanke messen.

## Patentansprüche

1. Verfahren zur Feststellung von Aerosolen in Luft, welche sich in einer Prüfzone befindet, bei welchem in einem ersten Schriff ein auf Licht ansprechendes Element (122), welches die Prüfzone (14) überwacht, beleuchtet wird, damit es vorgespannt wird und ein elektrisches Spannungssignal liefert und, unmittelbar nachdem der erste Schritt beendet ist, in einem zweiten Schritt die Prüfzone (14) beleuchtet wird, wobei allfällig in der Prüfzone anwesendes Aerosol Licht gegen das auf Licht ansprechende Element (122) reflektiert, dadurch gekennzeichnet, dass in einem dritten Schritt die von der Anwesenheit von Aerosol in der Prüfzone abhängige Dauer der Abfallflanke des elektrischen Spannungssignals nach Beendigung des ersten Schrittes und gleichzeitig mit dem zweiten Schritt gemessen wird, und dass ein Alarm ausgelöst wird, wenn die gemessene Dauer der Abfallflanke des elektrischen Spannungssignals einen bestimmten Wert überschreitet.

2. Verfahren nach Anspruch 1, dadurch gekennzeichnet, dass das auf Licht ansprechende Element (122) zyklisch mit pulsierend emittiertem Licht beleuchtet wird, damit es während jedem Zyklus einen elektrischen Impuls bestimmter Dauer liefert, dass die Prüfzone (14) zyklisch mit einem Lichtimpuls, welcher sofort nach dem Erlöschen des genannten pulsierend emittierten Lichtes erscheint, beleuchtet wird, wobei die Dauer der Abfallflanke des elektrischen Impulses bei Anwesenheit eines Aerosols in der Prüfzone verlängert wird, und dass zur Alarmauslösung die Dauer der Abfallflanke der genannten elektrischen Impulse zyklisch gemessen wird.

3. Gerät zur Feststellung von Aerosolen in Luft, welche sich in einer Prüfzone befindet, mit Mitteln (12) zur Abgrenzung dieser Prüfzone (14), einem auf Licht ansprechenden Element (122), welches derart angeordnet ist, dass es die Prüfzone überwacht, einer ersten Lichtquelle (120) zum direkten Beleuchten des auf Licht ansprechenden Elementes (122), einer zweiten Lichtquelle (118) zum Beleuchten der Prüfzone (14) und allfälliger sich in dieser befindlichen Aerosole, einer Energiequelle zum Liefern der Energie für die Lichtquellen, einer Alarmauswerteschaltung und Alarmmitteln (134) zum Erzeugen eines Alarmsignals, wenn sich Aerosol in der Prüfzone befindet, dadurch gekennzeichnet, dass Steuermittel (124, 26, 128) vorgesehen sind, welche an die Energiequelle, die genannten Lichtquellen (118, 120) und das auf Licht ansprechende Element (122) angeschlossen sind, um diese Lichtquellen zyklisch kurz nacheinander zu erregen, wobei von der ersten Lichtquelle (120) gelieferte Lichtimpulse das auf Licht ansprechende Element (122) beleuchten, damit es einen elektrischen Impuls liefert, dessen Abfallflanke eine bestimmte Dauer aufweist, und ein von der zweiten Lichtquelle (118) gelieferter Lichtimpuls die Prüfzone (14) beleuchtet und von allfällig in der Prüfzone vorhandenen Aerosolen gegen das auf Licht ansprechende Element (122) reflektiert wird, um die Dauer der Abfallflanke des elektrischen Impulses zu verlängern, dass Zeitmessungsmittel (132) zum Messen der Dauer der genannten Abfallflanke und zum Betätigen der Alarmmittel vorhanden sind, wenn die Dauer der Abfallflanke des elektrischen Impulses einen bestimmten Wert überschreitet.

4. Gerät nach Anspruch 3, dadurch gekennzeichnet, dass die Steuermittel (124, 26, 128) einen Sägezahngenerator (36, 38) aufweisen, um die erste Lichtquelle (220) und Vergleichsmittel (224), welche an den Sägezahngenerator und an das auf Licht ansprechende Element (222) angeschlossen sind, zu speisen, damit die erste Lichtquelle (220) zwischen bestimmten Werten der Ausgangsspannung des auf Licht ansprechenden Elementes aktiv wird.

5. Gerät nach Anspruch 4, dadurch gekennzeichnet, dass die Steuermittel (124, 26, 128) einen Pegeldetektor (128) aufweisen, welcher an das auf Licht ansprechende Element (122) und an die zweite Lichtquelle (118) angeschlossen ist, um die zweite Lichtquelle zu speisen, wenn die Ausgangsspannung des auf Licht ansprechenden Elementes einen bestimmten Wert erreicht.

6. Gerät nach Anspruch 5, dadurch gekennzeichnet, dass es Schaltmittel (130) aufweist, welche derart geschaltet sind, dass sie auf die Ausgangsspannung des Pegeldetektors (128) ansprechen, um die erste Lichtquelle (120) zu entregen, wobei die zweite Lichtquelle (118) erregt wird.

7. Gerät nach Anspruch 3, dadurch gekennzeichnet, das als Lichtquellen (118, 120) Leuchtdioden vorgesehen sind.

8. Gerät nach Anspruch 3, dadurch gekennzeichnet, dass das auf Licht ansprechende Element (122) eine Kennlinie in Funktion der Zeit mit einem verhältnismässig langsamen Anstieg und einem verhältnismässig steilen Abfall aufweist.

9. Gerät nach Anspruch 5, dadurch gekennzeichnet, dass der Pegeldetektor (128) ein Verstärker mit Hysteresis ist.

10. Gerät nach Anspruch 3, dadurch gekennzeichnet, dass das auf Licht ansprechende Element (122) derart geschaltet ist, dass es einen elektrischen Impuls bestimmter Dauer liefert, wenn kein Aerosol in der Prüfzone (14) anwesend ist und einen elektrischen Impuls liefert, dessen Dauer verschieden ist, wenn ein Aerosol in der Prüfzone anwesend ist.

11. Gerät nach Anspruch 3, dadurch gekennzeichnet, dass ein weiteres auf Licht ansprechendes Element (23) derart geschaltet ist, dass es die von der zweiten Lichtquelle (218) gelieferten Lichtimpulse empfängt, dass dieses weitere Element (23) an eine Auswerteschaltung (25) angeschlossen ist, welche über ein Schaltmittel (27) mit einem Störungsmelder (31) verbunden ist, und dass eine Alarmauswerteschaltung (42) an das Schaltmittel (27) angeschlossen ist, um dieses zu öffnen, wenn ein Alarm vorhanden ist.

12. Gerät nach Anspruch 11, dadurch gekennzeichnet, dass ein Prüfmodul (40) an die zweite Lichtquelle (218), an den Ausgang der Alarmauswerteschaltung (42), an einen die Alarmauswerteschaltung mit dem Alarmmittel (234) verbindenden Schalter (41) und an den Störungsmelder (31) über ein Oder-Tor (43) angeschlossen ist, und dass das Prüfmodul (40) ferner über einen Verstärker (39) und einen Widerstand (44) mit der ersten Lichtquelle (220) verbunden ist, um während der Leuchtzeit der zweiten Lichtquelle (218) in Funktion zu treten und die erste Lichtquelle (220) zum Leuchten zu bringen und dadurch die Funktionstüchtigkeit des Gerätes zu überwachen und jede Störung zu melden.

13. Gerät nach Anspruch 3, dadurch gekennzeichnet, dass die Steuermittel einen Zeitschalter (48, Fig. 6) aufweisen, um die erste Lichtquelle (620) zu erregen, ein Paar Verstärker (45, 46), welche einen Fenster-Diskriminator bilden, der an das auf Licht ansprechende Element (622) angeschlossen ist, sowie ein Gatter (47), welches an den Fenster-Diskriminator und an den Zeitschalter (48) angeschlossen ist, um Steuersignale der zweiten Lichtquelle (618) und den Zeitmessungsmitteln (632) zu liefern.

14. Gerät nach Anspruch 3, dadurch gekennzeichnet, dass ein weiteres auf Licht ansprechendes Element (58, Fig. 7) vorgesehen ist, welches an das genannte auf Licht ansprechende Element (722) angeschlossen ist, dass eine dritte Lichtquelle (60) vorgesehen ist, um das weitere auf Licht ansprechende Element (58) zu beleuchten, und dass ein Regulierungsmittel (64) an die dritte Lichtquelle (60) angeschlossen ist, um ihre Lichtstärke so einzustellen, dass der Widerstand des weiteren auf Licht ansprechenden Elementes (58) gleich dem Widerstand des zuerstgenannten Elementes (722) wird, wenn Aerosol in der Prüfzone anwesend ist.

**Claims**

1. Process for detecting aerosols in air situated in a test zone, wherein, in a first step, a photosensitive element (122) which monitors the test zone (14) is illuminated in order that it may be biased and supply an electrical voltage signal and, immediately after termination of the first step, in a second step, the test zone (14) is illuminated, any aerosol present in the test zone reflecting light towards the photosensitive element (122), characterized in that in a third step, the duration, dependent upon the presence of aerosol in the test zone, of the trailing edge of the electrical voltage signal is measured after termination of the first step and simultaneously with the second step, and that an alarm is set off when the measured duration of the trailing edge of the electrical voltage signal exceeds a certain value.

2. Process according to claim 1, characterized in that the photosensitive element (122) is illuminated cyclically with pulsatingly emitted light in order that it may supply an electrical pulse of a certain duration during each cycle, that the test zone (14) is illuminated cyclically with a light pulse which appears immediately after the said pulsatingly emitted light is extinguished, the duration of the trailing edge of the electrical pulse being prolonged upon presence of an aerosol in the test zone, and that for setting off the alarm, the duration of the trailing edge of the said electrical pulses is cyclically measured.

3. Apparatus for detecting aerosols in air situated in a test zone, hawing means (12) for delimiting this test zone (14), a photosensitive element (122) disposed in such a way that it monitors the test zone, a first light source (120) for directly illuminating the photosensitive element (122), a second light source (118) for illuminating the test zone (14) and any aerosols present in this zone, an energy source for supplying the energy for the light sources, an alarm evaluation circuit and alarm means (134) for producing an alarm signal when aerosol is present in the test zone, characterized in that control means (124, 26, 128) are provided which are connected to the energy source, the said light sources (118, 120) and the photosensitive element (122) in order to energize these light sources cyclically in quick sucession, light pulses supplied by the first light source (120) illuminating the photosensitive element (122) in order that it may supply an electrical pulse having a trailing edge of a certain duration, and a light pulse supplied by the second light source (118) illuminating the test zone (14) and being reflected towards the photosensitive element (122) by any aerosols present in the test zone in order to prolong the duration of the trailing edge of the electrical pulse, that there are time-measurement means (132) for measuring the duration of the said trailing edge and for actuating the alarm means when the duration of the trailing edge of the electrical pulse exceeds a certain value.

4. Apparatus according to claim 3, characterized in that the control means (124, 26, 128) comprise a saw-tooth generator (36, 38) for feeding the first light source (20) and comparison means (224) connected to the saw-tooth generator and to the photosensitive element (222) in order that the first light source (220) may become active between certain values of the output voltage of the photosensitive element.

5. Apparatus according to claim 4, characterized in that the control means (124, 26, 128) comprise a level detector connected to the photosensitive element (122) and to the second light source (118) in order to feed the second light source when the output voltage of the photosensitive element reaches a certain value.

6. Apparatus according to claim 5, characterized in that it comprises switching means (130) connected in such a way that they respond to the output voltage of the level detector (128) in order to de-energize the first light source (120), the second light source (118) being energized.

7. Apparatus according to claim 3, characterized in that light-emitting diodes are provided for as light sources (118, 120).

8. Apparatus according to claim 3, characterized in that the photosensitive element (122) has a characteristic as a function of time having a relatively slow rise and a relatively steep drop.

9. Apparatus according to claim 5, characterized in that the level detector (128) is an amplifier with hysteresis.

10. Apparatus according to claim 3, characterized in that the photosensitive element (122) is connected in such a way that it supplies an electrical pulse of a certain duration when no aerosol is present in the test zone (14) and supplies an electrical pulse of a different duration when aerosol is present in the test zone.

11. Apparatus according to claim 3, characterized in that a further photosensitive element (23) is connected in such a way that it receives the light pulses supplied by the second light source (218), that this further element (23) is connected to an evaluating circuit (25) which is connected via a switching means (27) to a fault indicator, and that an alarm evaluation circuit (42) is connected to the switching means (27) in order to open the latter when there is an alarm.

12. Apparatus according to claim 11, characterized in that a test module (40) is connected to the second light source (218), to the output of the alarm evaluation circuit (42), to a switch (41) connecting the alarm evaluation circuit to the alarm means (234), and to the fault indicator (31) or an OR gate (43), and that the test module (40) is further connected via an amplifier (39) and a resistor (44) to the first light source (220) in order to enter into operation during the lighting time of the second light source (218) and to cause the first light source (220) to light up and thereby to monitor the serviceability of the apparatus and to signal any trouble.

13. Apparatus according to claim 3, characterized in that the control means comprise a time switch (48, Fig. 6) to energize the first light source (620), a pair of amplifiers (45, 46) forming a window discriminator connected to the photosensitive element (622), as well as a gate circuit (47) connected to the window discriminator and to the time switch (48) in order to supply control signals to the second light source (618) and to the time-measurement means (632).

14. Apparatus according to claim 3, characterized in that a further photosensitive element (58, Fig. 7) is provided, which is connected to the said photosensitive element (722), that a third light source (60) is provided in order to illuminate the further photosensitive element (58), and that a regulating means (64) is connected to the third light source (60) in order to adjust its luminous intensity in such a way that the resistance of the further photosensitive element (58) becomes equal to the resistance of the first-mentioned element (722) when an aerosol is present in the test zone.

## Revendications

1. Procédé de détection d'aérosols dans l'air se trouvant dans une zone de contrôle, dans lequel dans un premier pas est éclairé un élément sensible à la lumière (122), qui surveille la zone de contrôle (14), afin qu'il soit polarisé et fournisse un signal de tension électrique et immédiatement après la fin du premier pas, dans un deuxième pas est éclairée la zone de contrôle (14), de sorte qu'un aérosol éventuellement présent dans la zone de contrôle réfléchit la lumière vers l'élément sensible à la lumière (122), caractérisé par la combinaison des caractéristiques suivantes: dans un troisième pas est mesurée la durée de la pente de décroissance du signal de tension électrique qui dépend de la présence d'aérosol dans la zone de contrôle, après la fin du premier pas et simultanément, avec le deuxième pas, et une alarme est déclenchée, lorsque la durée mesurée de la pente de décroissance du signal de tension électrique dépasse une valeur déterminée.

2. Procédé selon la revendication 1, caractérisé par le fait que l'élément sensible à la lumière (122) est éclairé cycliquement avec une lumière émise pulsatoirement, afin qu'il fournisse une impulsion électrique d'une durée déterminée pendant chaque cycle, que la zone de contrôle (14) est éclairée cycliquement avec une impulsion lumineuse, qui apparait immédiatement après l'extinction de la dite lumière émise pulsatoirement, de sorte que la durée de la pente de décroissance d'impulsion électrique est prolongée en absence d'un aérosol, et que la durée de la pente de décroissance desdites impulsions électriques est mesurée cycliquement.

3. Dispositif de détection d'aérosols dans l'air se trouvant dans une zone de contrôle, avec des moyens (12) de délimitation de cette zone de contrôle (14), un élement sensible à la lumière (122) qui est disposé de manière qu'il surveille la zone de contrôle, une première source lumineuse (120) pour éclairer directement l'élément sensible à la lumière (122), une deuxième source lumineuse (118) pour éclairer la zone de contrôle (14) et les aérosols présents éventuellement dans celle-ci, une source d'énergie pour fournir l'énergie aux sources lumineuses, un circuit d'évaluation d'une alarme et moyens d'alarme (134) pour engendrer une alarme, lorsqu'un aérosol est présent dans la zone de contrôle, caractérisé par la combinaison des caractéristiques suivantes: des moyens de commande (124, 26, 128) sont prévus, qui sont reliés à la source d'énergie, auxdites sources lumineuses (118, 120) et à l'élément sensible à la lumière (122), pour exciter ces sources de lumière cycliquement et brièvement l'une après l'autre, les impulsions lumineuses fournies par la première source lumineuse (120) éclairant l'élément sensible à la lumière (122), pour prolonger la durée de la pente de décroissance d'impulsion électrique, et des moyens de mesure du temps (132) sont prévus pour mesurer la durée de ladite pente de décroissance et actionner les moyens d'alarme, lorsque la durée de la pente de décroissance d'impulsion électrique dépasse une valeur déterminée.

4. Dispositif selon la revendication 3, caractérisé par le fait que les moyens de commande (124, 26, 128) comprennent un générateur de dents de scie (36, 38), pour alimenter la prèmière source lumineuse (220) et des moyens de comparaison (224), qui sont reliés au générateur de dents de scie et à l'élément sensible à la lumière (222), afin que la première source lumineuse (220) devienne active entre les valeurs déterminées de la tension de sortie de l'élément sensible à la lumière.

5. Dispositif selon la revendication 4, caractérisé par le fait que les moyens de commande (124, 26, 128) comprennent un détecteur de niveau (128), qui est relié à l'élément sensible à la lumière (122) et à la deuxième source lumineuse (118), pour alimenter la deuxième source lumineuse, lorsque la tension de sortie de l'élément sensible à la lumière atteint une valeur déterminée.

6. Dispositif selon la revendication 5, caractérisé par le fait qu'il comprend des moyens de commutation (130), qui sont branchés de manière qu'ils répondent à la tension de sortie du détecteur de niveau (128), pour désexciter la première source lumineuse (120), la deuxième source lumineuse (118) étant excitée.

7. Dispositif selon la revendication 3, caractérisé par le fait que les sources lumineuses (118, 120) sont constituées par des diodes électroluminescentes.

8. Dispositif selon la revendication 3, caractérisé par le fait que l'élément sensible à la lumière (122) possède une caractéristique en fonction du temps avec une croissance relativement lente et une décroissance relativement rapide.

9. Dispositif selon la revendication 5, caractérisé par le fait que le détecteur de niveau (128) est un amplificateur avec hystérésis.

10. Dispositif selon revendication 3, caractérisé par le fait que l'élement sensible à la lumière (122) est branché de manière qu'il fournit une impulsion électrique avec une durée déterminée, lorsqu'aucun aérosol n'est présent dans la zone de contrôle (14) et il fournit une impulsion dont la durée est différente, lorsqu'un aérosol est présent dans la zone de contrôle.

11. Dispositif selon la revendication 3, caractérisé par le fait qu'un autre élément sensible à la lumière (23) est branché de manière qu'il reçoit les impulsions lumineuses fournies par la deuxième source lumineuse (218), que cet autre élément (23) est relié à un circuit d'évaluation (25), qui est connecté à un avertisseur de dérangement (31) par l'intermédiaire d'un moyen de commutation (27) et qu'un circuit d'évaluation d'alarme (42) est relié audit moyen de commutation (27), pour ouvrir celui-ci lorqu'une alarme est présente.

12. Dispositif selon la revendication 11, caractérisé par le fait qu'un module de contrôle (40) est relié à la deuxième source lumineuse (218), à la sortie du circuit d'évaluation d'alarme (42), à un commutateur (41) qui relie le circuit d'évaluation d'alarme aux moyens d'alarme (234) et à l'avertisseur de dérangement (31) par l'intermédiaire d'une porte Ou (43), et que le module de contrôle (40) est en outre relié à la première source lumineuse (220) par l'intermédiaire d'un amplificateur (39) et d'une résistance (44), pour entrer en fonction pendant le temps durant laquelle la deuxième source lumineuse (218) est allumée et provoquer l'allumage de la première source lumineuse (220) et pour surveiller ainsi la capacité de fonctionnement du dispositif et signaler chaque dérangement.

13. Dispositif selon la revendication 3, caractérisé per le fait que les moyens de commande comprennent un interrupteur horaire (48, Fig. 6), pour exiter la première source lumineuse (620), une paire d'amplificateurs (45, 46), qui forment un discriminateur à fenêtre, qui est relié à l'élément sensible à la lumière (622), ainsi qu'une porte (47) qui est connectée au discriminateur à fenêtre et à l'interrupteur horaire (48), pour fournir les signaux de commande à la deuxième source lumineuse (618) et aux moyens de mesure du temps (632).

14. Dispositif selon la revendication 3, caractérisé par le fait qu'un autre élément sensible à la lumière (58, fig. 7) est prévu, qui est relié audit élément sensible à la lumière (722), qu'une troisième source lumineuse (60) est prévue pour éclairer ledit autre élément sensible à la lumière (58), et qu'un moyen de réglage (64) est connecté à la troisième source lumineuse (60), pour régler son intensité lumineuse de manière que la résistance dudit autre élément sensible à la lumière (58) devienne égale à la résistance de l'élément (722) mentionné d'abord, lorsqu'un aérosol est présent dans la zone de contrôle.

Fig. 1

Fig. 2

Fig.3

Ohne Rauch
T1

Mit Rauch
T2

V+

0,5 V

0 V

10 Sek.

V2

V1

Fig. 4

0,505 V  Einschaltpegel

0,495 V  Rückstellpegel

V1

V2

VA2

VA1

VA2

VA1

Ta

Tb

V1

Fig. 5

0,505V  Einschaltpegel

Rückstellpegel
0,495 V

V1

V2

VA2

VA1

Tc

Td

V1

0 022 438

Fig. 6

632 Zeitschalter

634 Alarm

618

47 G1

45 A1

46 A2

622

V2'

620

48 Zeit-schalter

Fig. 7

734 Alarm

732 Zeitsch.

718

64

728 A2  $V_{A2}$

722

V2

60

58

62

724 A1  $V_{A1}$

720

R1 736

V1

738

730